# EUROPEAN PATENT APPLICATION

(11) **EP 1 315 368 A2**
(43) Date of publication of application: **28.05.2003**
(21) Application number: 02258014.6
(22) Date of filing: 21.11.2002
(51) Int. Cl.: H04N 5/00

(54) **Methods and apparatus for generating multiple network streams from a large scale memory buffer**

(30) Priority: 21.11.2001 US 990093
(71) Applicant: Broadbus Technologies, Inc., Boxborough, Massachusetts 01719 (US)
(72) Inventor: Binder, Jeffrey, c/o Broadbus Technologies, Inc., Boxborough, Massachusetts 01719 (US); Scheffler, Robert, c/o Broadbus Technologies, Inc., Boxborough, Massachusetts 01719 (US)
(74) Representative: Hitching, Peter Matthew

(57) **Abstract**

Multiple output streams of video and/or audio data are simultaneously generated from a large scale memory buffer array and sent to one or more customer devices for playback. The data is sent over networks, which use one or more protocols for data communication. Thus, for each network, a transport protocol stack is generated. The transport protocol stack is generated in hardware, thus greatly improving the throughput, and increasing the number of streams that can be generated. A wide data bus and wide address bus can be utilized because the protocol stack is generated in hardware, so that higher throughput can be achieved from the large scale memory buffer array. A plurality of protocol stack generators can have access to the same block of memory, allowing many output streams to be generated from a single copy of content in the large scale memory buffer array.

## Description

This invention relates to methods and apparatus for attaching multiple network processors, or output stream processors, to a large-scale unitary memory array, and more particularly, to apparatus for streaming electronic information from a large-scale unitary memory array to multiple attached networks, using hardware-based network processors or stream processors that generate transport protocols for the streams. A hardware-based arbitrator controls access of the stream processors to the memory array.

### BACKGROUND OF THE INVENTION

The ability to share a large memory array between multiple network processors allows multiple output streams to be generated from a single copy of material, and to be transmitted simultaneously through many output ports at different intervals, without having to replicate or make copies of the content. The larger the memory buffer is, the more data or unique programs or source material can be stored. By utilizing a unitary memory array, it is possible to generate many outputs from a single copy of the program material. The present invention is especially well suited to audio and video streaming applications where the program material size, or payload, is large, and a great number of simultaneous playback streams need to be generated.

When building audio, video, or Internet streaming servers (collectively "servers"), there are great demands placed on the architecture. There are several design parameters that must be considered. One is the number of simultaneous output streams or playback sessions that are required. Another is the total size in bytes of the information to be streamed. A third parameter is the data rate, or bit-rate of each output stream. By knowing these parameters, one can specify a target implementation architecture.

There are many types of existing high-speed network interfaces to implement the output connection. Typically, these exist as network controller chips. These network controllers are well suited for central processing unit (CPU) based computers, such as a PC or Workstation. PC's and workstations usually contain a PCI bus, or similar expansion interface for adding network and I/O controller cards. Such expansion buses are designed for a single processor as might be found in a desktop computer system. Moreover, computers contain only a single network controller. In specific cases, such as a file server, there may be multiple network interfaces, but usually no more than two.

An object of a streaming server is to stream as much content as possible to as many users as possible, from as small a space as possible. However, there are limitations on the number of network interfaces that can be added to a computer towards this goal.

Typical computers contain a single CPU or central processing unit. Among other things, the CPU is responsible for running software to generate all of the network traffic, usually called a transport protocol stack. However, the speed of the CPU then becomes a limitation or performance bottleneck. To overcome this limitation, multiple CPU's are usually added. However, implementation of this approach for the present application would require multiple network interface cards, and multiple CPU's all competing for the interconnect or data bus structure in the server. Some solutions to this bottleneck have been devised, with varying levels of success.

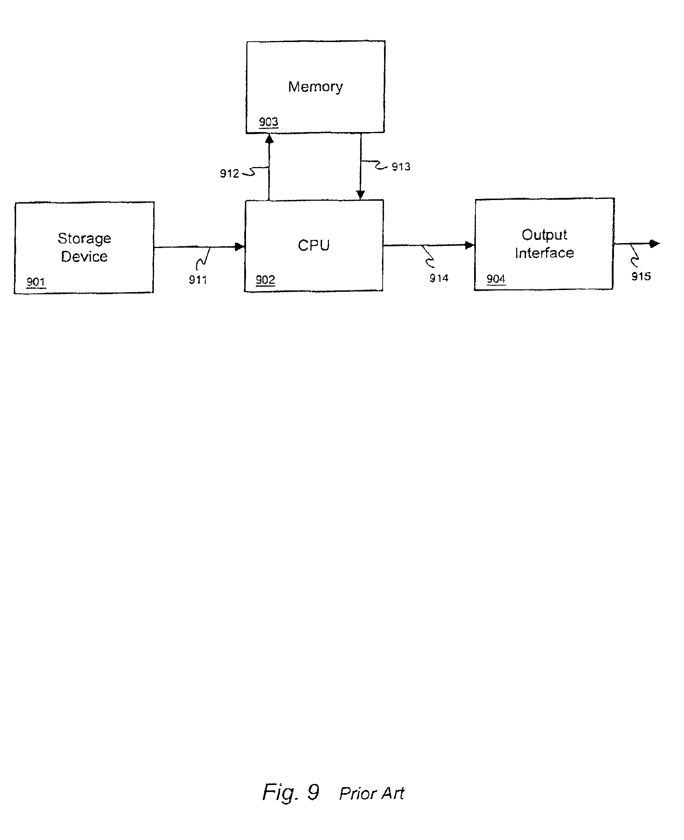

Fig. 9 shows one implementation of the prior art. In this configuration, a CPU 902 controls and implements all data transfers. A data block is retrieved from a storage device 901 by the CPU 902 over signal lines 911, and the data block is subsequently written to a memory 903 over signal lines 912. After a complete block is stored in the memory 903, the CPU 902 can generate appropriate networking protocol packets and store them in the memory 903, under software control. Once a protocol packet has been stored in the memory 903, the CPU 902 can move the packet to the output interface 904, over signal lines 914. The data block is sent to a client device through line 915.

The final parameter relates to storage. All of the streaming payload data must originate in the server. In current architectures, the data is usually stored in hard disk drives. All hard disk drives have two main limiting factors, the sustained transfer rate of the data, and the seek time or random access time. The transfer rate dictates how fast data can be read from the drive in a continuous manner. Seek time dictates the latency for moving from one part of the drive to another to access a specific data block. Any time spent seeking to a specific location on a disk takes away from the time that could be used for transferring data. In this way, the efficiency of a disk drive can be greatly reduced by the seek time. In a streaming server application, there can be many output streams, each representing different programs, or different locations in the same program. This creates a bottleneck in the storage subsystem, as the disk drive will spend a significant amount of time seeking for the appropriate data block. To overcome this, more hard drives are added.

The greater the number of output streams, the more hard drives the system will require. Hard drives can be combined into arrays or groups of drives, such as RAID (Redundant Array of Inexpensive Disks) and JBOD (Just a Bunch Of Disks) configurations, but ultimately, all rotational media has transfer rate and seek time limitations.

Data blocks read from the storage device 901 can be of different size than the final protocol block size. This buffer size translation can be accomplished under program control by the CPU 902. This system is economical since there is no substantial hardware, and all functions are accomplished by the software on the CPU 902. The primary limitation to this approach is performance, which is constrained by the CPU processing time.

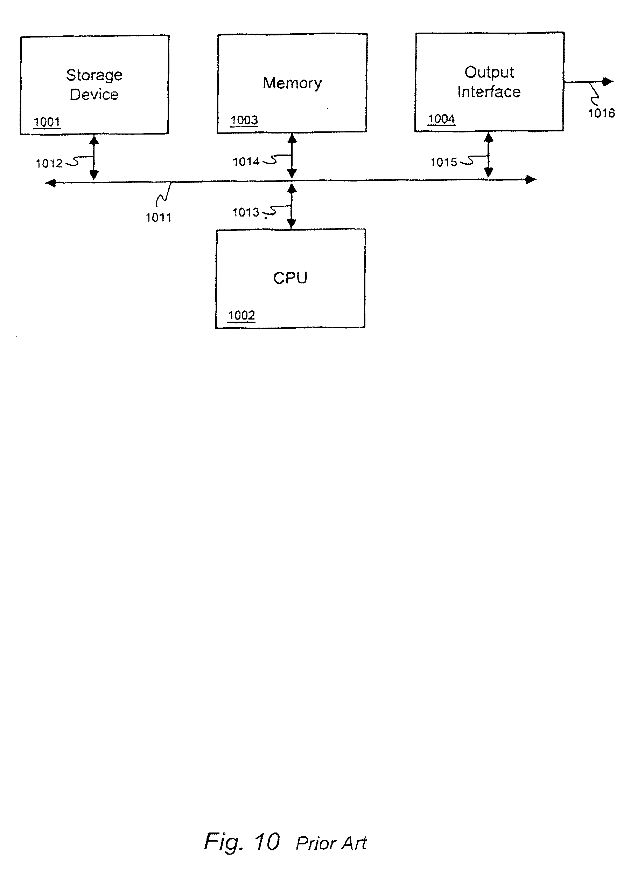

Fig. 10 is an improved version of the prior art just described that implements Direct Memory Access or DMA. In this version, a shared bus 1011 is added to allow a storage device 1001 and an output interface 1004 to directly access the memory 1003. The CPU 1002 begins by setting up a transfer with storage device 1001, by using signal lines 1013, bus 1011, and signal lines 1012. The storage device 1001 then begins initiating a transfer to memory 1003, over signal lines 1012, bus 1011, and signal lines 1014, to memory 1003. The transfer can occur without the CPU 1002 being in the data path, which increases performance.

Once a block of data is in memory 1003, the CPU 1002 generates the appropriate networking protocol packets and stores them in memory 1003, under software control. Once a protocol packet has been stored in the memory 1003, the CPU 1002 sets up the output transfer to the output interface 1004. The output interface 1004 then initiates a transfer from memory 1003, over signal lines 1014, bus 1011, signal lines 1015, and through the output interface 1004 to the output 1016. In this system, the CPU is not responsible for actually moving the data, which increases performance when compared to the system in Fig. 9. However, the protocol packets are still generated by the CPU 1002, the memory 1003 has a relatively small size, and the bus 1011 must be shared with all devices. Even with the fastest bus and the fastest CPU, this architecture is limited in capacity when compared to the inventive system.

Accordingly, one object of the present invention is to increase the number of output streams possible from a single memory. Another object of the invention is to increase the size of the data bus and address bus so that a higher data rate can be achieved from a much larger memory array. Another object of the invention is to remove the generic CPU from the memory bus arbitration process and the protocol stack generation process.

### SUMMARY OF THE INVENTION

In keeping with one aspect of this invention, a large scale memory stores a number of video, audio, audiovisual and other content. The memory is random access, eliminating the access times required by hard disk drives. The content can be read out of the memory to multiple customer sites over several networks, many of which use different network protocols. Content is stored in the memory and read out of the memory to the various customer sites under the control of a hardware based arbitrator.

The content is bundled into data packets, each of which is encoded with a protocol to form a transport protocol stack. The transport protocol stack is generated in hardware-based architecture, thus greatly improving the throughput, and increasing the number of streams that can be generated. A wide data bus and wide address bus can be utilized because the protocol stack is generated in hardware, so that higher throughput can be achieved from a large scale memory. A plurality of protocol stack generators have access to the same block of memory, allowing many output streams to be generated from a single copy of content in the large scale memory.

### BRIEF DESCRIPTION OF THE DRAWINGS

The above mentioned and other features of this invention and the manner of obtaining them will become more apparent, and the invention itself will be best understood by reference to the following description of an embodiment of the invention taken in conjunction with the accompanying drawings, in which:
FIG. 1 is a block diagram of an embodiment of a communication system made in accordance with the present invention;
FIG. 2 is a block diagram of a portion of the system of Fig. 1;
FIG. 3 is a flow chart showing the operation of the arbitrator of Fig. 2;
FIG. 4 is a block diagram of a stream server module in the system of Fig. 1;
FIG. 5 is a block diagram of the stream server processor in the stream server module of Fig. 4;
FIG. 6 is a block diagram showing the input and output paths of a stream controller in the stream server processor of Fig. 5;
FIG. 7 is a state diagram showing the operation of the stream controller of Fig. 6;
FIG. 8 is a flowchart of the operation of the protocol encoder logic of Fig. 5, referenced in state S704 in Fig. 7;
FIG. 9 is a block diagram of a conventional communication system; and
FIG. 10 is a block diagram of another conventional communication system.

### DETAILED DESCRIPTION

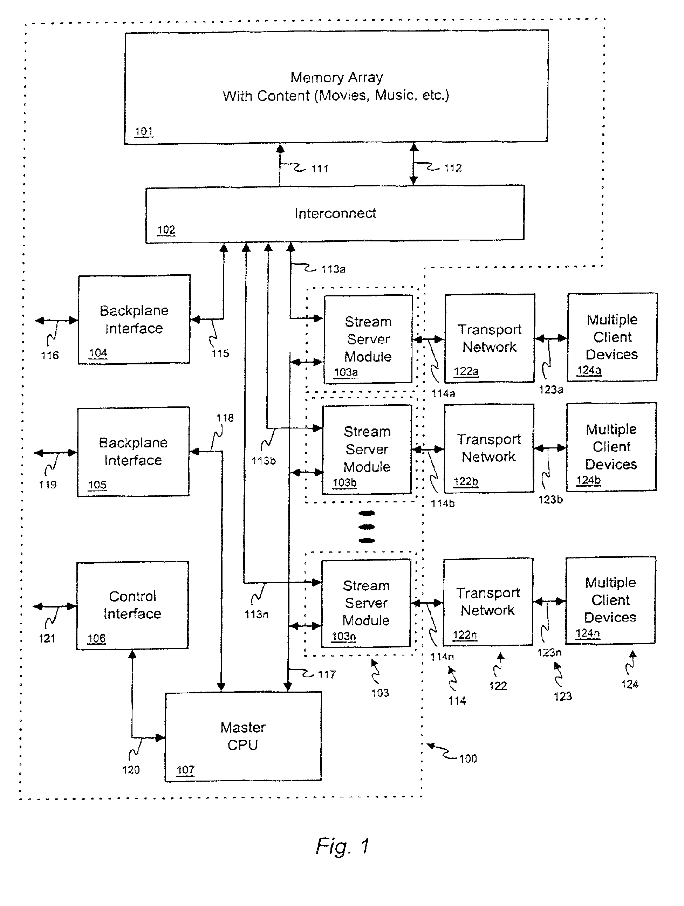

As seen in Fig. 1, a server system 100 is primarily built from a memory array 101, an interconnect device 102, and stream server modules 103a through 103n (103). The server system 100 is part of a communication system that also includes transport networks 122a through 122n (122), and client devices 124a through 124n (124). In a typical system, each client device would operate through a single transport network, but each transport network could communicate with the server system 100 through any of the stream server modules.

Each transport network can operate using a different protocol, such as IP (Internet Protocol), ATM (Asynchronous Transfer Mode), Ethernet, or other suitable Layer-2 or Layer-3 protocol. In addition, a specific transport network can operate with multiple upper-level protocols such as Quick Time, Real Networks, RTP (Real Time Protocol), RTSP (Real Time Streaming Protocol), UDP (User Datagram Protocol), TCP (Transport Control Protocol), etc. A typical example would be an Ethernet transport network with IP protocol packets that contain UDP packets, which in turn contain RTP payload packets.

The communication process starts with a stream request being sent from a client device 124 over an associated transport network 122. The command for the request arrives over a signal line 114a-114n (114) to a stream server module 103, where the protocol information is decoded. If the request comes in from stream server module 103a, for example, it travels over a bus 117 to a master CPU 107. The master CPU can be implemented using any number of commercially available CPU's, one such CPU being a PowerPC 750 made by Motorola. For local configuration and status updates, the CPU 107 is also connected to a local control interface 106 over signal line 120, which communicates with the system operator over a line 121. Typically this could be a terminal or local computer using a serial connection or network connection.

Control functions, or non-streaming payloads, are handled by the master CPU 107. Program instructions in the master CPU 107 determine the location of the desired content or program material in memory array 101. The memory array 101 is a large scale memory buffer that can store video, audio and other information. In this manner, the server system 100 can provide a variety of content to several customer devices simultaneously. Customer sessions can include movies, music, sports events, written information, etc., each of which can represent a program. However, each customer device can receive the same content or different content. Each customer receives a unique asynchronous stream of data that might or might not coincide in time with unique asynchronous streams sent to other customer devices.

If the requested content is not already resident in the memory array 101, a request to load the program is issued over signal line 118, through a backplane interface 105 and over a signal line 119. An external processor or CPU (not shown) responds to the request by loading the requested program content over a backplane line 116, under the control of backplane interface 104. Backplane interface 104 is connected to the memory array 101 through the interconnect 102. This allows the memory array 101 to be shared by the stream server modules 103, as well as the backplane interface 104. The program content is written from the backplane interface 104, sent over signal line 115, through interconnect 102, over signal line 112, and finally to the memory array 101.

Backplanes typically operate more efficiently when moving data in chunks, or blocks. As such, backplane interface 104, interconnect 102, and memory array 101 can each contain small buffers to allow larger 'bursts' of data to be transferred. Another way to achieve higher speeds is to use a wider bus path, such as 128 bits, 256 bits, or larger. A wider bus interface allows more bytes of data to be transferred on each memory access cycle.

When the first block of program material has been loaded into memory array 101, the streaming output can begin. Streaming output can also be delayed until the entire program has been loaded into memory array 101, or at any point in between. Data playback is controlled by a selected one or more stream server modules 103. If the stream server module 103a is selected, for example, the stream server module 103a sends read requests over signal line 113a, through the interconnect 102, over a signal line 111 to the memory array 101. A block of data is read from the memory array 101, sent over signal line 112, through the interconnect 102, and over signal line 113a to the stream server module 103a. Once the block of data has arrived at the stream server module 103a, the transport protocol stack is generated for this block and the result is sent to transport network 122a over signal line 114a. Transport network 122a then carries the steaming output data block to the client device 124a over signal line 123a. This process is repeated for each data block contained in the program source material.

If the requested program content already resides in the memory array 101, the CPU 107 informs the stream server controller 103a of the actual location in the memory array. With this information, the stream server module can begin requesting the program stream from memory array 101 immediately.

The system is broken into two separate paths; the first is for large content or payload; the second is for control and other non-payload types of packets. Non-payload packets could be VCR type controls or "Trick Mode" packets, such as Pause, Fast-Forward, Rewind, etc., as well as program listings, or content availability information. Since these signals are generally not very CPU demanding, they can be easily handled by a CPU running software. The actual payload packets are very CPU intensive, yet little processing needs to be done to the payload. In this case, the stream server module 103a, or other stream server module, can handle the transfer and movement of payload data, without requiring participation by the master CPU 107. This separation of the paths allows a much higher system density, and provides a much greater stream capacity when compared to CPU based designs.

Memory array 101 is preferably large enough to hold many source programs, and could be many Gigabytes or Terabytes in size. A minimum of 65 gigabytes is recommended. Such source programs can be in the form of video, audio, or data, including but not limited to any combination thereof. Such memory arrays may be built from conventional memory including but not limited to dynamic random access memory (DRAM), synchronous DRAM (SDRAM), Rambus DRAM (RDRAM), dual datarate DRAM (DDRDRAM), static RAM (SRAM), magnetic RAM (MRAM), flash memory, or any memory that is solid state in nature. Dual inline memory modules (DIMMs) can be used. In order to access such a large memory array, a wide address bus is used. A conventional 32-bit address bus is only sufficient to address 4 Gigabytes of RAM, and is not preferred for this application. An address bus greater than 36 bits wide is preferred, and a 48 bit address bus would be more suitable for this application because it can directly access 256 Petabytes of memory.

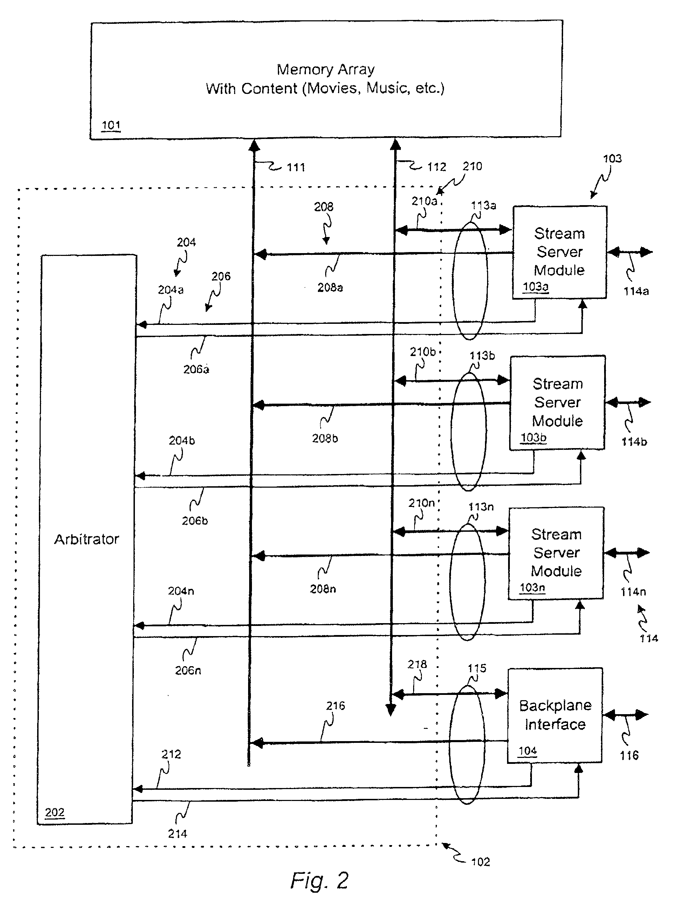

The interconnect 102 is shown in greater detail in Fig. 2. The interconnect 102 controls the transfer of data between the memory array 101 and the stream server modules 103. The interconnect 102 also establishes priority among the stream server modules 103, determining the order in which the stream server modules receive data from the memory 101.

The interconnect 102 includes an arbitrator 202. The arbitrator 202 is preferably hardware based, and can include a field programmable gate array or another suitable device. The arbitrator 202 is a hardware based state machine. In prioritizing requests, the arbitrator 202 could be programmed to give the backplane interface 104 top priority, if desired. The several stream server modules 103 can be given priority in any suitable manner, such as serial priority, priority based on content such as audio, video, etc. or any other desirable manner.

Each stream server module is connected to an address bus 111 through signal lines 208a...208n (208). Data is sent from the memory array 101 to the stream server modules 103 over a data bus 112 and signal lines 210a-210n (210).

The stream server modules request data through the arbitrator 202. For example, the stream server module 103a sends requests for data to the arbitrator 202 over the signal line 204a. When the arbitrator decides that the stream server module 103a should receive data, an authorization is sent over a line 210a. In this manner, the arbitrator sets priority with respect to the stream server modules.

The backplane interface 104 is used to load new information into the memory array 101, among other things. The new information is provided through the signal line 116 through the backplane interface 104. When the backplane interface 104 receives data, it requests access to the address bus 111 and the data bus 112 from the arbitrator 202 through a signal line 212. The arbitrator 202 authorizes data transfer over a signal line 214. Upon authorization, the backplane interface 104 provides address data to the memory array 101 over the bus 111, using the signal line 216. Data is transferred over the bus 112 through a signal line 218.

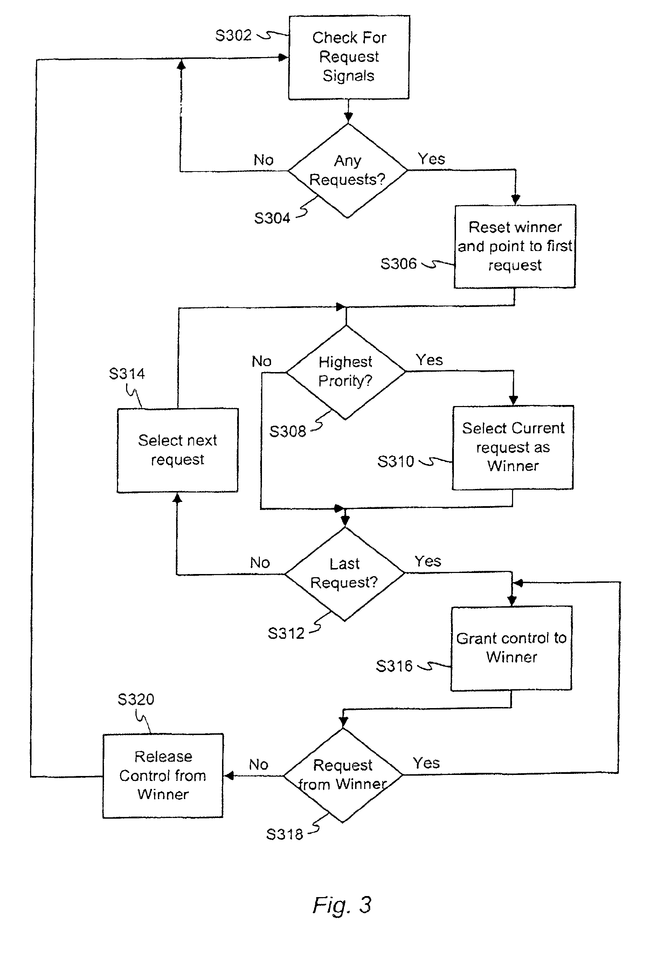

The operation of the arbitrator 202 is shown in greater detail in the flow chart of Fig. 3. At step S302, the arbitrator 202 determines what, if any, request signals have been received from the stream server modules 103 and the backplane interface 104. If there are no requests, the arbitrator waits for requests to be received by looping around steps S302 and S304. If one or more requests have been received at step S304, then the arbitrator stores all requesting devices, resets the selected "winning" device, and sets a pointer to the first requesting device at step S306. Since there can be multiple devices all requesting simultaneously, the highest priority device must be selected as the "winner". S308 checks to see if the currently selected requestor has the highest priority. If it does, then the new "winner" is selected in S310. The process continues for all requesting devices through S312, which checks for the last device. If this is not the last one, S314 will increment the pointer to select the next device. The process repeats until all requests have been evaluated for their priority, the highest priority device being designated as the "Winner". Once complete, control is granted to the "Winner" in S316. The winner can now issue commands through the arbitrator. Service remains granted to this "winner" as long as the currently selected device demands service. S318 monitors the request signal from the arbitrated winner, and holds the control grant as long as the request is present by looping through S318 and S316. Once the device has stopped requesting service, as determined in S318, S320 releases control from the winning requestor, and passes control back to S302, which starts the arbitration again.

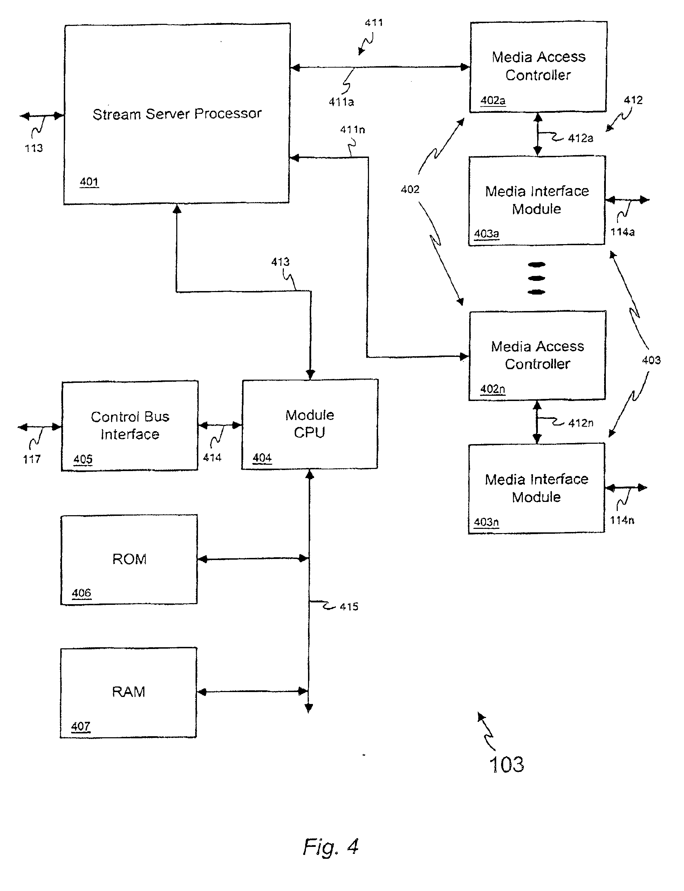

Fig. 4 is a block diagram of an implementation of the stream server modules 103 shown in Fig. 1. A stream server processor (SSP) 401 serves as the automatic payload requester, as well as the protocol encoder and decoder. The SSP 401 requests and receives data payload over signal line 113. It then encodes and forms network packets, such as TCP/IP or UDP/IP or the like. The encoded packets are sent out over signal lines 411a-411n (411), to one or more media access controllers (MAC) 402a-402n (402). The media access controllers 402 handle the serialization and de-serialization of data and formatting as required by the specific physical network used. In the case of Ethernet, the Media Access Controllers 402 also handle the detection of collisions and the auto-recovery of link-level network errors.

The media access controllers 402 are connected utilizing signal lines 412a-412n (412), to media interface modules 403a-403n (403), which are responsible for the physical media of the network connection. This could be a twisted-pair transceiver for Ethernet, Fiber-Optic interface for Ethernet, SONET or many other suitable physical interfaces, which exist now or will be created in the future, such interfaces being appropriate for the physical low-level interface of the desired network, and sent out over the signal lines 114a-114n (114).

When control packets are required, such as VCR like controls, it is more efficient to handle the processing in a CPU instead of hardware. Depending on the installation requirements, the protocols can change frequently, and could vary from system to system. In certain cases, the control protocol stack could be customized depending on the installation environment. For these reasons, the control functions can be implemented in CPU 404. By contrast, however, the actual payload protocol stack is relatively stable, so it can be processed in hardware. Additionally, a hardware implementation allows for a wide data path, much wider than the data path for a standard CPU, which typically has a 32 bit or 64 bit data path. By using a wider bus, such as a 256 bit data bus, much more data can be moved from memory on each access cycle.

It is desirable that the width of the SSP data bus be wider than that of the CPU. Preferably, the SSP 401 would use re-programmable hardware logic, such as a Field Programmable Gate Array (FPGA). This would allow the payload protocol to be updated as needed, while still achieving superior performance compared to software. This flexibility allows different SSP's in the same server to be programmed for different protocols as needed. By utilizing a FPGA based architecture, the entire hardware function can be changed with a simple code file update in as little as 100ms.

In practice, the stream server processor 401 divides the input and output packets depending on their function. If the packet is an outgoing payload packet, it can be generated directly in the stream server processor (SSP) 401. The SSP 401 then sends the packet to MAC 402a, for example, over signal line 411a. The MAC 402a then uses the media interface module 403a and signal line 412a to send the packet to the network over signal line 114a.

Client control requests are received over network wire 114a by the media interface module 403a, signal line 412a and MAC 402a. The MAC 402a then sends the request to the SSP 401. The SSP 401 then separates the control packets and forwards them to the module CPU 404 over the signal line 413. The module CPU 404 then utilizes a stored program in ROM/Flash ROM 406, or the like, to process the control packet. For program execution and storing local variables, it is typical to include some working RAM 407. The ROM 406 and RAM 407 are connected to the CPU over local bus 415, which is usually directly connected to the CPU 404.

The module CPU 404 from each stream server module uses signal line 414, control bus interface 405, and bus signal line 117 to forward requests for program content and related system control functions to the master CPU 107 in Fig. 1. By placing a module CPU 404 in each stream server module, the task of session management and session control can be handled close to the network lines 114a-114n. This distributes the CPU load and allows a much greater number of simultaneous stream connections per network interface.

There are many ways to interconnect the stream server modules and CPU's in the system. Only one specific example has been presented here.

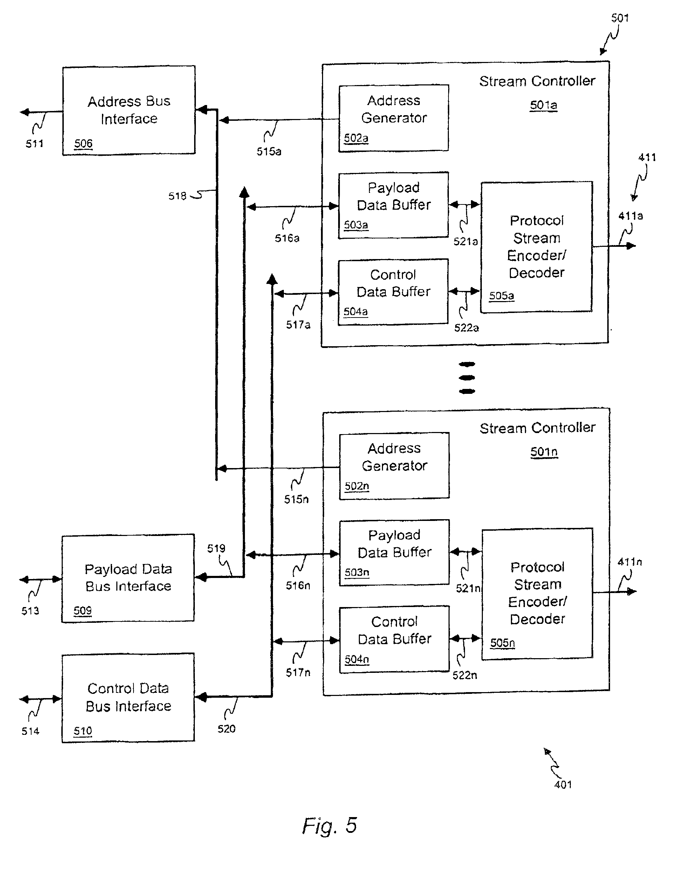

Fig. 5 shows one implementation of the stream server processor (SSP) 401 of Fig. 4. The SSP 401 includes one or more stream controllers 501a-501n (501), which are interconnected by an address bus 518, a payload data bus 519, and a control data bus 520. When data is required for the protocol stream encoder/decoder 505a, for example, an address is generated by address generator 502a. To allow access to very large memory arrays, the address generator 502a should be capable of generating 48-bit addresses. Addresses are fed out of stream controller 501a, over signal line 515a, then over address bus 518, to address bus interface 506. The address bus interface 506 then sends the required addresses out of the SSP over line 511. Data is then returned from the external RAM buffer over signal line 513 and into payload data bus interface 509, then onto bus 519, over signal line 516a and into payload data buffer 503a. Data is then sent from the payload data buffer 503a, over signal line 521a, through protocol stream encoder/decoder 505a, and out through line 411a.

To maximize the throughput of the system, a wide data bus is utilized, such as 128 or 256 bits. Buffering the data in the payload data buffer 503a allows the payload data bus interface 509 and associated busses to operate at a separate transfer speed from that of the protocol stream encoder/decoder 505a. The protocol packets, such as TCP/IP, or UDP/IP, with RTP, RTSP, or other such higher-level transport protocols are generated in the protocol stream encoder/decoder 505a. By using a hardware device to generate the protocol packets, a much greater data throughput rate is achieved. After the protocol packets are generated, the data is sent out in packets, or blocks, over line 411a. This process can continue with little or no processor overhead required.

The control packets, such as stop, play, pause, etc., as well as content lists or show times and schedules, are used less frequently, represent a small amount of data, and require special handling, so it is usually more efficient to handle them with a CPU instead of directly in hardware. To accommodate this, incoming control packets are received over line 411a and received by the protocol stream encoder/decoder 505a, the appropriate transport protocol is decoded, and then the control data is forwarded over line 522a to the control data buffer 504a. Control packets are then sent out from the control data buffer 504a, over line 517a, onto bus 520, through control data bus interface 510, and out onto line 514.

For outbound control packets, such as session management or program listings, the packets use the reverse route. Control packets arrive at the control data bus interface 510 over line 514. From there, the control packets travel over bus 520, onto line 517a, into the control data buffer 504a, over line 522a, and into the protocol stream encoder/decoder 505a, where they are encoded, and are then sent out over the line 411a. Buffering the control data in the control data buffer 504a allows the control data bus interface 510 and associated busses to operate at a separate transfer speed from that of the protocol stream encoder/decoder 505a.

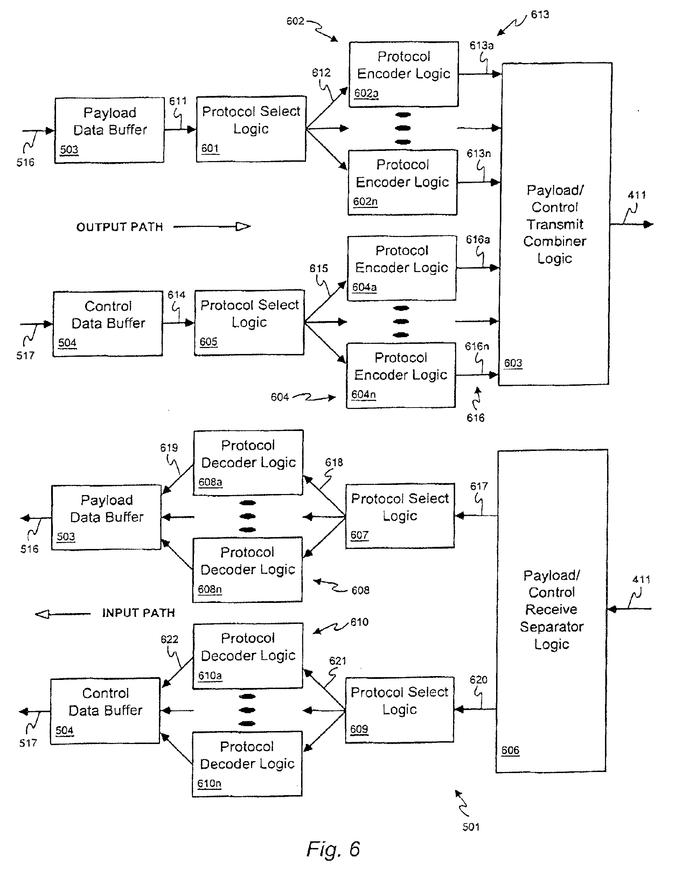

Fig. 6 is a detailed block diagram of a portion of one of the stream controllers 501. Outgoing payload data is provided on a line 516 and is clocked through the payload data buffer 503. The data is sent over line 611, to a protocol select logic array 601, which sends the data to an appropriate protocol encoder logic array 602a-602n (602), through lines 612. After the data blocks are encoded with the correct protocol, they are sent over lines 613a-613n (613) to the payload/control transmit combiner logic 403, and to the network interface over line 411.

Outgoing control data for a particular transmission is sent over line 517 to a control data buffer 504. The output of the control data buffer 504 is sent over line 614 to protocol select logic circuitry 605, which identifies the required protocol, and sends the data over one of the lines 615 to an appropriate protocol encoder logic circuit 604a-604n (604). The encoded data is sent to the payload/control transmit combiner logic 603 over lines 616a-616n (616), and the control information is transmitted over line 411.

Incoming data is decoded in a similar manner. Data entering the system through line 411 is stripped in payload/control receive separator logic 606. The payload data is sent over line 617 to protocol select logic 607. The protocol select logic identifies the protocol used for the particular payload, and sends the data over an appropriate line 618 to the correct protocol decoder logic circuitry 608a-608n (608). The output of the decoded data is clocked through payload data buffer 503 over lines 619, and sent out over line 516.

Control data is decoded in a similar manner. Entering the system through line 411, the data is stripped in payload/control receive separator logic 606. The stripped data is sent over line 620 through protocol select logic 609, which identifies the protocol used for the control data, and sends the data over an appropriate line 621 to the desired protocol decoder logic 610a-610n (610). The decoded data is sent over line 622 and clocked through a selected control data buffer 504, leaving the stream controller through line 517.

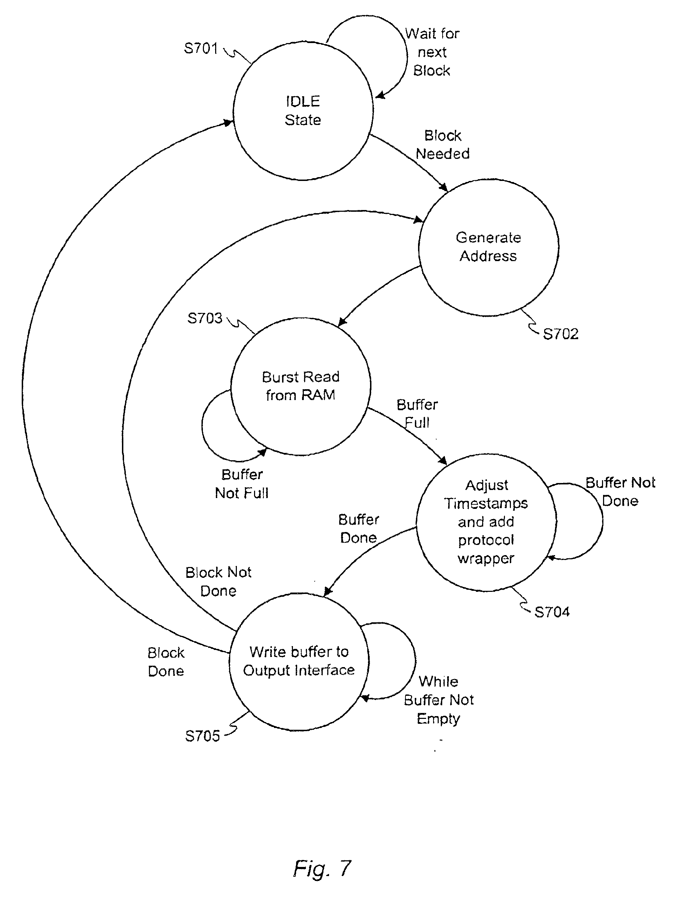

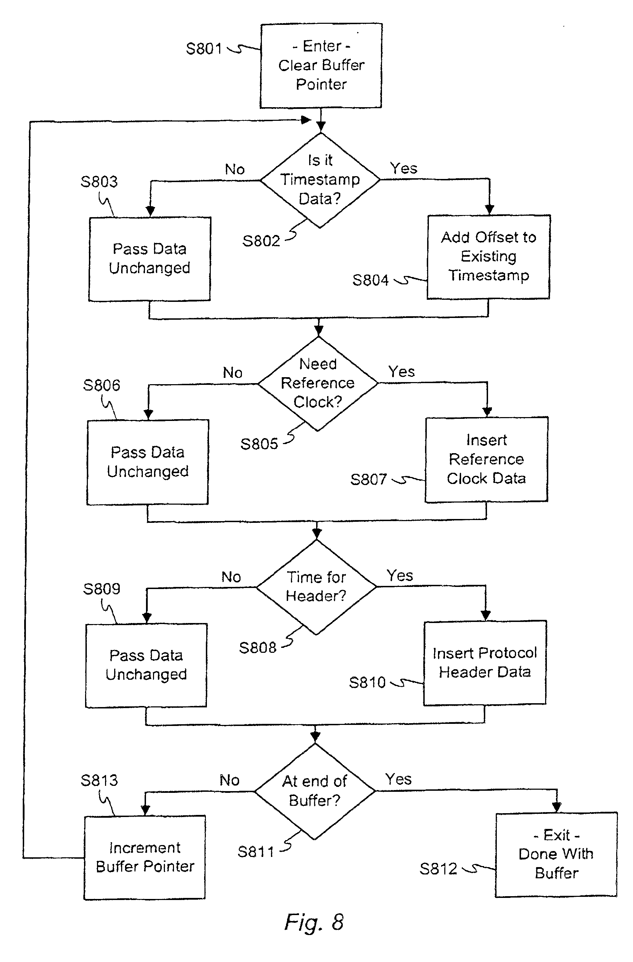

Fig. 7 is a state diagram for the stream controllers 501 shown in Fig. 5. The stream controller operates in an idle state S701 until a block of content data is required. At that time, the appropriate addresses are generated at S702, and the content data is read from the memory 101 as a burst in state S703. The memory 101 burst is read until the buffer is full. Then, if needed, time stamps are adjusted and a protocol wrapper is added at state S704 until all the data in the buffer is encoded with the appropriate protocol. The operational state details of S704 are further described in Fig. 8. The data in the buffer is written to an output interface in state S705, and the stream controller returns to the idle state at S701.

Fig. 8 details the operation of the protocol encoder logic 505 as shown in Fig. 5, which is referenced in state S704 of Fig. 7. At step S801 the buffer pointer is cleared. At step S802, the logic array determines whether a block of data from the buffer has a time stamp. If not, the data is passed unchanged at S803, and if so, offset is added to the existing time stamp at S804. The logic array then determines whether a reference clock is needed at S805. If not, the data is passed unchanged at S806, and if so, reference clock data is inserted at S807. At S808, the array determines whether header data is needed. If not, the data is passed unchanged at S809, and if so, protocol header data is inserted at S810, depending on the encoded protocol. If the buffer is not full at S811, the buffer pointer is incremented at S813 and the array returns to S802. At the end of the buffer burst at S811, the encoder is finished and exits at S812.

The many advantages of the invention are now apparent. The larger amount of content can be streamed to many users from a single large scale memory. A high data rate is achieved, as well as high throughput. Many output streams can be generated from a single copy of content in the large scale memory buffer.

While the principles of the invention have been described above in connection with specific apparatus and applications, it is to be understood that this description is made only by way of example and not as a limitation on the scope of the invention.

## Claims

1. Apparatus for generating multiple streams of video and/or audio data comprising:
a large scale memory device;
means for storing said data in said large scale memory device; and
means for retrieving at least a portion of said data from said large scale memory device and generating multiple asynchronous streams of data, said retrieving means including:
(a) at least two stream server processors operatively connected to said large scale memory device;
(b) an interconnect allowing near simultaneous access to said data stored in said large scale memory device by said at least two stream server processors,
(c) said interconnect including a hardware based arbitrator operatively connected to said at least two stream server processors for controlling access to said large scale memory device so that said multiple unique streams of data may be generated by one or more of said at least two stream server processors from said large scale memory device; and
(d) means for generating protocols necessary for the transport of each unique stream across at least one network and for decoding said unique streams of data.

2. The apparatus of claim 1, wherein the data stored and retrieved from said large scale memory device includes audio with a predetermined relationship to said video.

3. The apparatus of claim I, wherein said large scale memory device is comprised of random access memory.

4. The apparatus of claim 3, wherein said large scale memory device has a storage capacity of at least 65 gigabytes.

5. The apparatus of claim 3, wherein said large scale memory device has an address bus greater than 36 bits.

6. The apparatus of claim 3, wherein said audio and/or video data includes multiple unique programs.

7. The apparatus of claim 6, wherein said multiple streams of asynchronous streams of data are simultaneously generated from said multiple unique programs.

8. The apparatus of claim 7, including means for allowing said stream(s) to be generated upon a first block of an audio/video program being stored in said large scale memory, without having to wait for entire said program to be written to said large scale memory.

9. The apparatus of claim 3, including a module CPU for each of said at least two stream server processors, each of said module CPUs using a first bus that is separate from a second bus from which said data streams are retrieved.

10. The apparatus of claim 1, wherein said large scale memory device is composed of dual inline memory modules.

11. The apparatus of claim 1, wherein said large scale memory device is composed of DRAM.

12. The apparatus of claim 1, wherein said large scale memory device is composed of magnetic RAM.

13. The apparatus of claim 1, wherein said large scale memory device is composed of dual data rate RAM.

14. The apparatus of claim 1, wherein said large scale memory device is composed static RAM.

15. The apparatus of claim 1, wherein said large scale memory device is composed synchronous DRAM.

16. The apparatus of claim 1, wherein the protocol associated with said streams of data is generated in hardware.

17. The apparatus of claim 1, wherein said stream server processors are interconnected and shared across a backplane.

18. The apparatus of claim 1, wherein said retrieving and generating means includes means for responding to VCR type controls, said controls being handled by a separate CPU running software.

19. A method for generating multiple asynchronous streams of video and/or audio data, including the steps of:
(a) generating one or more video and/or audio program streams,
(b) transferring said program stream(s) to a large scale memory device,
(c) storing at least a portion of said program stream(s) in said memory device,
(d) establishing sessions in response to a request from one or more customer terminals to generate one or more program stream(s), said request being handled by a CPU that uses a first bus separate from a second over which program streams are transferred to said customer terminal, and
(e) using a separate hardware based processor for retrieving and generating one or more program streams for said customer terminal from one or more program streams stored in said large scale memory.

20. The method of claim 19, wherein said large scale memory device is comprised of random access memory.

21. The method of claim 19, further comprising the step of generating multiple program streams using multiple hardware based processors that simultaneously access said large scale memory device.

22. The method of claim 19, further comprising the step of generating a protocol stack associated with each of said data streams in said hardware based processor.
